# EUROPÄISCHE PATENTSCHRIFT

(11) **EP 1 557 503 B1**
(45) Veröffentlichungstag und Bekanntmachung des Hinweises auf die Patenterteilung: **01.08.2012**
(21) Anmeldenummer: 04025858.4
(22) Anmeldetag: 31.10.2004
(51) Int. Cl.: E04B 1/76, C09J 175/04, E04B 1/80, E02D 27/02, E02D 31/02

(54) **Kunststoffschaumplatten für Gebäudeisolierung**
Synthetic foam panels for building isolation
Panneaux synthétiques de mousse pour l'isolation de bâtiment

(30) Priorität: 22.01.2004 DE 102004003470
(43) Veröffentlichungstag der Anmeldung: 27.07.2005
(73) Patentinhaber: Jackon Insulation GmbH, 39619 Arendsee (DE)
(72) Erfinder: Plate, Mark, Dr., 29410 Salzwedel (DE); Paulmann, Ulrich, 33803 Steinhagen (DE); Hirschle, Werner, 33803 Steinhagen (DE)
(74) Vertreter: Kaewert, Klaus

(56) Entgegenhaltungen:
- EP-A- 1 213 118
- DE-A1- 10 007 775
- DE-A1- 10 024 678
- DE-A1- 19 539 511

## Beschreibung

Die Erfindung betrifft Kunststoffschaumplatten für die vertikale Gebäudeaußenisolierung.

Die vertikale Gebäudeaußenisolierung mit Kunststoffschaumplatten ist seit langem Stand der Technik. Solche Kunststoffschaumplatten werden als Polystyrolschaumplatten umfangreich benutzt. Vorzugsweise finden dabei Platten aus Kunststoffschaumpartikeln Verwendung.

Die Schaumpartikel können auf unterschiedlichen Wegen hergestellt werden, z.B. im Autoklaven oder durch Extrusion von dünnen Schaumsträngen und durch deren Granulierung. Die Schaumpartikel werden üblicherweise unter Druck in einen Formhohlraum gefüllt und dort mit Heißdampf bedampft, so daß die Schaumpartikel an der Außenfläche erweichen. Unter dem gleichzeitig bestehenden Druck verschweißen die Schaumpartikel miteinanander zu dem gewünschten Formteil. Auf dem Wege hergestellt Platten werden als EPS-Platten bezeichnet.

Die Schaumplatten können auch durch Spritzschäumen erzeugt werden. Beim Spritzschäumen wird treibmittelbeladene Schmelze in eine Form gegeben. In der Form bildet das Treibmittel eine Vielzahl von Gasblasen, so daß ein Schaum entsteht, der den Formhohlraum vollständig ausfüllt. Nach entsprechender Abkühlung ist der Schaum fest. Derartige Platten sind jedoch selten.

Dagegen ist das Extrudieren von Polystyrolschaumplatten gebräuchlich, auch wenn Polsystyrolschaumplatten im Fassenbereich sehr viel weniger vorkommen als EPS-Platten. Die extrudierten Polystyrolschaumplatten werden als XPS-Platten bezeichnet.

Das Extrudieren basiert auf der Verwendung von Extrudern, in denen das Polystyrol aufgeschmolzen und mit verschiedenen Additiven und Zuschlägen vermischt wird. Zu den Zuschlägen kann auch ein chemisches Treibmittel gehören, daß erst nach Verlassen des Extruders reagiert.

Zeitgemäße Treibmittel sind physikalische Treibmittel, die in flüssiger Form in den Extruder gedrückt und in die Schmelze eingemischt werden.

Danach folgt üblicherweise eine Abkühlung der Schmelze auf die Temperatur, die für den Schmelzeaustritt aus dem Extruder günstig ist.

Bei dem Schmelzeaustritt an die Umgebungsluft fällt der Schmelzedruck auf Umgebungsdruck ab. Dadurch expandiert das in der Schmelze eingeschlossene Treibmittel bzw. Treibgas und bildet sich Schaum. Die Form des Schaumes wird einerseits durch die Form der Extrusionsdüse und andererseits durch einen Kalibrator bestimmt. Der Kalibrator besitzt Metallwände, welche den entstehenden Schaumstrang in eine Querschnittsform zwingen, der dem Querschnitt der gewünschten Platten schon weitgehend entspricht. Weitgehend heißt, der Querschnitt besitzt gegenüber dem gewünschten Plattenquerschnitt ein geringes Übermaß. Der so entstehende(unbehandelte) Strang wird Extrusionsstrang genannt. Der Extrusionsstrang wird üblicherweise durch Fräsen oberflächenbearbeitet. Das schließt eine Bearbeitung am Rand(Kanten) ein. Dabei wird die sogenannte Extrusionshaut entfernt. Die Extrusionshaut entsteht, wenn der aus dem Extruder austretende Schaum auf die Platten des Kalibrators trifft. Das führt zu einer beschleunigten Abkühlung und Materialverdichtung am Außenmantel.

Die EPS-Platten und die extrudierten Platten unterscheiden sich vor allem im Preis. Die EPS-Platten sind erheblich preisgünstiger als die extrudierten Platten. Dafür haben die extrudierten Platten eine bessere spezifische Wärmeisolierung, auch eine geringe spezifische Feuchtigkeitsaufnahme.

Die geringe Feuchtigkeitsaufnahme bewirkt eine Verbesserung der Wärmeisolierung und Witterungsbeständigkeit.

An der Fassade werden üblicherweise gleichwohl fast nur EPS-Platten eingesetzt. Die Feuchtigkeitsaufnahme von EPS-Platten liegt ungefähr bei 5Vol%, bezogen auf das Plattenvolumen. Dagegen beträgt die Feuchtigkeitsaufnahme eines unbehandelten Extruderstranges rund 1Vol%, bezogen auf das Volumen des Extruderstranges. Die größere Feuchtigkeitsaufnahme der EPS-Platten ist darauf zurückzuführen, daß zwischen den Schaumpartikeln winzige Hohlräume verbleiben, wenn die Partikel im Formteilautomaten miteinander verschweißt werden.

Die außen am Gebäude vorgesehenen Kunststoffschaumplatten werden üblicherweise mit sogenannten Befestigern an dem Mauerwerk gehalten. Die Befestiger bestehen zumeist aus Kunststofftellern, die mit Schrauben oder Nägeln in das Mauerwerk dringen und dort verankert sind. In der Regel dienen dabei Dübel zur Verankerung.

An den Stoßstellen greifen die Kunststoffschaumplatten üblicherweise mit einem Stufenfalz oder mit Nut und Feder ineinander.

Die Stoßstellen der Kunststoffschaumplatten werden zumeist überspachtelt, die Spachtelstelle mit einer Glasfaserschicht armiert. Auf die so entstandene Fläche wird ein Putz aufgetragen. Der Putz wird verhältnismäßig dünn aufgetragen.

Ingesamt besteht die Wärmeisolierung außen an den Gebäuden demnach aus Kunststoffschaumplatten und einer Putzschicht.

In anderen Anwendungsfeldern ist eine Verbindung der Platten mit Betonen oder mit Mörtel vorgesehen.

Die Schaumplatten finden sich aber nicht nur oberhalb des Erdreiches am Gebäude , sondern auch unterhalb des Erdreiches an Fundamenten und/oder Kellergeschossen. Unterhalb des Erdreiches wird von der Perimeterdämmung gesprochen.

Im Perimeterbereich bieten die extrudierten Polystyrolschaumplatten aufgrund ihrer geringeren Feuchtigkeitsaufnahme trotz des höheren Preises wesentlich bessere Eigenschafen Früher wurden dort Schaumplatten mit Extusionshaut eingesetzt.

An den Gebäuden gibt es einen problematischen Übergang vom Fassadenbereich zum Perimeterbereich und umgekehrt. Der Übergang wird häufig als Sockelbereich bezeichnet. Der Sockelbereich ist nicht ganz stark feuchtigkeitsbelastet wie der Perimeterbereich, Die Belastung ist aber noch beträchtlich.. Gleichwohl ist es üblich, auch im Sockelbereich EPS-Platten einzusetzen.

In einem nachveröffentlichten älteren Vorschlag DE 20023344U1 ist eine äußere Beschichtung von Wärmedämmplatten aus Polystyrol (EPS/XPS) oder Polyurethan (PUR) mit niedriger Wasserdampfdiffusionszahl vorgesehen. Die Beschichtung soll mit Putz mit niedrigerer Wasserdampfdiffusionszahl oder mit vorgefertigten Verbundplatten erfolgen. Die Beschichtung als Verbundplatte im Werk hat den Vorteil geringer Arbeitskosten und einer hohen gleichmäßigen Qualität der Beschichtung durch die industrielle Fertigung. Als Beschichtigung ist ein Baustoff mit der Markenbezeichnung LETON vorgesehen, wie er in dem europäischen Patent EP 107026 beschrieben ist und auf dem Markt als Putz, Spachtel, Kleber, als Bauplatte und Steine verfügbar ist. Dieser Baustoff besteht aus natürlichen mineralischen silikatischen Feinstbestandteilen mit hydrophilen Eigenschaften, die die niedrige Wasserdampfdiffusionszahl der gelochten EPS/PUR-Wärmedämmplatten gewährleisten.

Der Erfindung liegt die Aufgabe zugrunde, die Wasseraufnahme an den Platten, insbesondere im Sockelbereich zu verbessern.

Nach der Erfindung wird das dadurch erreicht, daß die EPS-Platten zur Reduktion der Wasseraufnahme mindestens einseitig an der dem Bauwerk abgewandten Seite mit einem Kleber *beschichtet sind, der für Wasserdampf diffusionsoffen und zugleich wasserabweisend ist* wobei der kleber gemäß Anspruch 1 ein Polyurethankleber ist, Vorzugsweise ist eine beidseitige, wahlweise auch eine allseitig Beschichtung mit einem für Wasserdampf diffusionsoffenen und zugleich wasserabweisenden Kleber vergesehen. Die Begriffe einseitig und zweiseitig beziehen sich auf die Breitseiten der Platten, welche meist in den Abmessungen 600 x 1250 mm vorkommen. Die allseitige Beschichtung schließt den Plattenrand ein.

Bei einseitiger Beschichtung ist vorzugsweise die am Gebäude dann außenseitige Breitseite der Platte mit dem Kleber versehen.

Mit der Kleberschicht reduziert sich die Wasseraufnahme der EPS-Platten. Dabei können die EPS-Platten je nach Auslegung des Klebers und der Kleberschicht hinsichtlich der Wasseraufnahme die Eigenschaften bisheriger XPS-Platten erreichen. Dies ist nicht nur für den Sockelbereich sondern für den ganzen Fassadenbereich von Vorteil.

An schaumhautlosen XPS-Platten kann die Feuchtigkeitsaufnahme durch erfindungsgemäßen Auftrag von diffusionsoffenem Kleber auf jedes sinnvolle Maß weiter reduziert werden. Vorzugsweise findet der Kleberauftrag nur auf den bearbeiteten Flächen der XPS-Platten Anwendung. In der Regel ist der Kleberauftrag auf XPS-Platten an den Flächen entbehrlich, die noch eine Extrusionshaut zeigen. Das ist in besonderem Maße für den Perimeterbereich von Vorteil.

Die Diffusionsoffenheit sichert ein vorteilhaftes Wohnklima im Gebäude, weil der Feuchtigkeit noch in einem ausreichendem Umfang Gelegenheit gegeben wird, in Form von Wasserdampf durch die Platten zu entweichen und ggfs. durch die Platten in das Gebäude einzudringen. Eine absolute Dampfsperre würde unter anderem die Gefahr eines gesundheitsschädlichen Pilzbefalls begründen.

Auch wenn im Fassadenbereich weiterhin und nach der Kleberbeschichtung erst recht EPS-Platten Anwendung finden, ist es vorteilhaft sein, im Sockelbereich die XPS-Platten anstelle der EPS-Platten zu verlegen, da diese duch ihre höhere Druckfestigkeit unempfindlichen gegenüber Belastungen sind.

Wahlweise sind die XPS-Platten nach dem Entfernen der Extrusionshaut wie oben bei den EPS-Platten beschrieben mit der erfindungsgemäßen Kleberschicht versehen. Das schließt die einseitige, auch die gebäudeaußenseitige oder beidseitige oder allseitige Kleberbeschichtung ein.

*Soweit XPS-Platten oder EPS-Platten mit einer Mörtelschicht versehen werden und als Bauplatten Einsatz finden* (of. DE/0024678) handelt es *sich um eine Technik, die nicht mit der erfindungsgemäßen Technik vergleichbar ist. Die Bauplatten sind als Grundlage für die Anbringung von Fliesen entwickelt worden. Die Bauplatten bilden dabei eine definierte Grundfläche. Der Schaumkern der Platten hat zugleich Isolierungsvorteile. Nun lassen sich keramische Fliesen nicht ohne weiteres auf einer Kunststoffschaumoberfläche verkleben. Die Mörtelschicht auf den Platten bildet den Haftvermittler zwischen Fliesen und Kunststoffschaumplatten. Außerdem hat die Mörtelschicht die Aufgabe, eine notwendige Armierung der Platten aufzunehmen. Als Armierung sind Glasfasergewebe üblich. **Ohne die Armierung kommt es zur Schüsselung der Kunststoffschaumplatten**. Infolge der Schüsselung können sich die Fliesen einzeln lösen. Es können sich auch die Platten vom Untergrund(Wände, Böden) lösen. Die Armierung wird deshalb auch als Einspannung der Schaumplatten bezeichnet. Die Einspannung ist zur Verhinderung drohender Schüsselung beidseitig erforderlich.*

*Die Mörtel bestehen üblicherweise aus einer Mischung von Sand bzw. mineralischen Bestandteilen und einem Kleber. Auch Zement wird als Kleber bezeichnet.*

*Viele Mörtel haften nicht ohne weiteres auf dem Kunststoffschaum, so daß noch zusätzliche Haftvermittler auf die Schaumoberfläche aufgetragen werden müssen. Häufig wird dazu der Kleber des Mörtels verwendet. Das heißt, es wird in einem vorlaufenden Arbeitsschritt zunächst eine dünne Kleberschicht auf den Kunststoffschaum aufgetragen, bevor die eigentliche Mörtelschicht aufgetragen wird.*

*Die Mörtelschicht wird klassisch mit Wasser angemischt. Das Wasser wird nur zum Teil gebunden. Wesentliche Teile des Wassers muß aus der Mörtelschicht entweichen können. Klassische Mörtelschicht müssen deshalb diffusionsoffen sein.*

*Obige Bauplattentechnik hat auch in der Fassadentechnik Anwendung gefunden. Dabei kann auf eine beidseitige Beschichtung verzichtet werden bzw. eine einseitige Beschichtung zulässig sein, wenn die Bauplatten durch entsprechende Befestiger(Dübel*/*Schrauben) eine gleichwertige Halterung an der Seite erfahren, die ohne Armierung ist.*

*Eine solche Anwendung im Fassadenbereich ist in der* DE 10007775A1 *beschrieben. Eine Kleberanwendung ohne anschließenden Auftrag einer Mörtelschicht ist dort nicht erkennbar. Auch ein Polyurethankleber ist dort nicht offenbart.*

*Die* DE1953951 *lAlbeinhaltet einen Vorschlag, der gleichfalls in eine andere Richtung als die Erfindung weist. Dabei finden zwar auch extrudierte Kunststoffschaumplatten Anwendung. Diese Kunststoffschaumplatten sollen jedoch entgegen der üblichen Bearbeitung der Platten mit Extrusionshaut Anwendung finden. Von der Extrusionshaut wird eine zusätzliche Dichtwirkung erwartet. Die Extrusionshaut ist aber dampfdichter.*

*Die* EP1213118A2 *zeigt zwar Kunststoffschaumplatten mit diffusionsoffenem Kleber. Dort dient der Kleber aber der Verbindung von dünneren Platten zu dickeren Platten. Mit der erfindungsgemäßen Verwendung hat das nichts gemeinsam.*

Der diffusionsoffene Kleber soll die Diffusionsfähigkeit der XPS-Platten nicht mehr als um 50% herabsetzen, vorzugsweise nicht mehr als 20% verändern.

Bei der EPS-Platte wird vorzugsweise durch die Kleberbeschichtung die Diffusionsfähigkeit der kleberbeschichteten XPS-Platten nicht unterschritten.

Die Diffusionsfähigkeit der Platten läßt sich leicht messen.

Unter diesen Vorgaben kann der Kleber aus den am Markt verfügbaren Klebern ausgewählt werden. Aus der Menge der Kleber soll insbesondere ein Polyurethan(PU)Kleber zum Einsatz kommen, der gleichzeitig ein Schmelzkleber und ein Reaktionskleber ist. Polyurethankleber sind sehr gebräuchliche Kleber, auch am Bau, auch für die Verklebung von Dämmstoffen am Bau.

Einen kleinen Ausschnitt zeigt die DE3317193A1. Darin sind unter Kleber beschrieben, die unter Feuchtigkeitszutritt unter Volumensvergrößerung aushärten.

Polyurethankleber ist zugleich sehr witterungsbeständig, d.h. sehr beständig gegen Wasser, Feuchte, Frost-Tau, höhere Temperaturen.

Beispielhaft wird auch auf die DE 19756930 A1 verwiesen. Der dort beschriebene Kleber ist aber nur ein reiner Reaktionskleber.

Der aus der DE 19756930 A1 bekannte Kleber ist ein diffusionsoffener Kleber, der jedoch nicht im Baubereich verwendet wird.

Die Verwendung diffusionsoffener Kleber ist zwar an sich bekannt. So verweist zum Beispiel die DE 68911643 T2 auf diffusionsdurchlässige und eine unterbrochene Klebeschicht zwischen Textilen und zwischen Autositzen. Auf die Lösung des Problemes der Feuchtigkeitsaufnahme von Fassadenplatten ist aber daraus kein Hinweis zu entnehmen.

Die Diffusionsoffenheit ist bei Stoffen und Geweben eine wichtige Eigenschaft.

Die DE 19504017 A1 schlägt dazu vor, aus Polyurethan eine diffusionsoffene und zugleich wasserabweisende Schicht zwischen zwei Textilschichten zu erzeugen. Nach der DE 19504017 A1 soll auf dem Wege eine Baufolie für Isolierzwecke erzeugt werden, die das Eindringen von Wasser in Gebäude verhindern, gleichzeitig aber die im Bau eingeschlossene Feuchtigkeit als Dampf entweichen lassen. Der Fachmann bewertet diese Folienherstellung wie zum Beispiel die Herstellung von Polyethylenfolien. Auch, wenn die Polyurethanfolie vor dem Ausreagieren klebrig ist, wird keine dieser Folien als Klebematerial angesehen. Dabei ist unschädlich, daß für die entstehenden Folien verklebt werden, auch mit hot-melt-Klebern.

In der US-PS 3953566 ist darüber hinaus beschrieben, wie eine ähnliche Folie mittels eines Klebstoffes auf ein Textil auflaminiert wird.

Ähnlich ist die Lösung der DE 3922028 A1, die ein Adhesivmaterial vorsehen, um die Folie mit der Textilschicht zu verbinden.

Andere Lösungen mit dergleichen Folien wie bspw. die DE 3836434 A1 schlagen vor, die Folie thermisch mittels eines Schmelzklebers auf die Textilschicht aufzukaschieren.

Die DE 3815720 A1 schlägt vor, die Folie auf der Textilschicht aufzuschweißen.

Die DE 41 21 716 A1 beschreibt gleichfalls die Herstellung einer membranartigen Folie für die Verbindung mit einem Textil. Die Folie ist als wasserabweisende, aber diffusionsoffene Schicht in mehrschichtigen Textilen vorgesehen, wie sie unter der Markenbezeichnung Goretex für Outdoor-Kleidung allgemein bekannt sind. Es heißt dort
Nach Kenntnis der Anmelderin kann aber aus keinem im Stand der Technik beschriebenen, geschweige denn im Handel erhältlichen Schmelzkleber eine membranartige Folie auf einer Faserschicht ausgebildet werden, die für Wasserdampf durchlässig ist und den Anwendungsbedingungen des fertigen Materials gewachsen ist.
Es ist daher wesentliche Aufgabe der Erfindung, Schmelzklebstoffe anzugeben, die sich zur Erzeugung einer wasserdampfdurchlässigen, membranartigen Folie in situ auf einem Fasermaterial eignen, so daß die Folienkomponente des Materials nicht fertig vorgebildet werden muß,

Zwar wird in der Beschreibungseinleitung zu der DE 41 21716 A1 auf bekannte Abdeckplanen der Bauindustrie verwiesen, die wasserundurchlässig aber dampfundurchlässig sind. Das versteht der Fachmann aber nur als Hintergrundinformation zu den Goretex-Textilien.

Auch bei der DE 4121716 A1 geht es nur um die Herstellung einer Folie. Insofern geht diese Druckschrift nicht über die anderen erläuterten Druckschriften und Folientechniken für die Textilherstellung hinaus.

Im Falle der DE 4121716 A1 wird wie in den oben erläuterten anderen Fällen eine Folie aus Polyurethan erzeugt. Es handelt sich um die gleiche Technik.

Daß die Folie auch bei dieser Lösung mit der Textilschicht verklebt wird, ist gegenüber dem Stand der Technik zur Textil-Herstellung keine Besonderheit. Von dem Stand der Technik unterscheidet sich die DE 4121716 A1 dadurch, daß das für die Folie verwendete Polyurethan zugleich ein Schmelzkleber ist. Für den Fachmann zur Herstellung von Kunststoffschaumplatten für den Bau ist die Textilherstellung kein Bereich, in dem er nach Vorlagen für seine Arbeit sucht.

Im übrigen weist die DE 4121716 A1 auf folgendes hin:
Im Stand der Technik ist eine unübersehbare Zahl verschiedenartigster Schmelzkleber bekannt. Üblicherweise enthalten diese Polymermaterial, das im wesentlichen Kohäsionseigenschaften des Kleber bestimmt, im Gemisch mit klebrig gemachten Harzen und dgl., die im wesentlichen für die Adhäsionseigenschaften ausschlaggebend sind. Hinzu kommen üblicherweise plastifizierende Komponenten. Alle drei genannten Hauptbestandteile können unterschiedlichster Art sein.

Die Auswahl eines richtigen Klebers aus so vielen angebotenen Klebern ist mehr oder weniger Zufall oder muß mit einem extremen Aufwand systematisch erfolgen, der über das einem Durchschnittsfachmann zumutbare Maß hinausgeht.

Für die Erfindung ist auch unschädlich, daß ähnliche Schmelzklebstoffe aus der DE 3827224 bekannt sind.

Nach der Erfindung ist ein Kleberauftrag von 80 bis 200 Gramm pro Quadratmeter, vorzugsweise ein Kleberauftrag von 100 bis 150 Gramm pro Quadratmeter vorgesehen, so daß sich die Wasseraufnahme an schaumhautlosen XPS-Platten auf mindestens 0,9 Vol%, bezogen auf das Plattenvolumen, vorzugsweise auf mindestens 0,7Vol% und noch weiter bevorzugt auf mindestens 0,5Vol%, bezogen auf das Plattenvolumen, verringert. An EPS-Platten wird der Kleberauftrag angepaßt, wenn gleiche Wasseraufnahmewerte wie bei XPS-Platten erreicht werden sollen.

Zum Auftragen von Kleber eignen sich Klebewalzen oder Düsen, aus denen der Kleber gesprüht wird. Mit den Walzen läßt sich jede gewünschte Verteilung (sowohl hinsichtlich der flächenmäßigen Ausdehnung als auch hinsichtlich der Dicke des Auftrages) des Klebers auf die Berührungsflächen herbeiführen. Der Kleberauftrag kann dabei wie ein Farbauftrag gehandhabt werden. In dem Sinne sind anstelle der Walzen auch Auftragsplatten nach dem Vorbild von Druckplatten geeignet.

Düsen sind als Klebewerkzeug besonders für Hot-Meltkleber geeignet. In der beheizten Düse ist der Kleber bei entsprechender Erwärmung so dünnflüssig, daß er als Flüssigkeit aufgesprüht werden kann. Der Kleber kann dabei in der Form von Tröpfchen oder als Strahl oder als Nebel aufgesprüht werden, so daß eine vollfllächige Deckung der vorgesehenen Fläche erreicht wird.

Es kann auch ein Aufstrich mittels Quast oder dergleichen erfolgen.

In weiterer Ausbildung der Erfindung wird mindestens eine Breitseite der Platten nach Auftragen des Klebers mit einem Haftvermittler in Form von Sandauftrag, Kiesauftrag oder Splittauftrag vorgesehen. Der Haftvermittler kann für üblicherweise an Fassadenplatten vorgesehene Putze verwendet werden. Die mit dem Haftvermittler versehene Breitseite ist diejenige Breitseite, die beim Verlegen der Platten an einer Gebäudewand gebäudeaußenseitig liegt.

Wahlweise sind beide Breitseiten mit einem Haftvermittler versehen.

Wahlweise wird an XPS-Platten auch nur eine Breitseite mit dem Haftvermittler versehen und befindet sich an der anderen Breitseite eine Extrusionshaut. Das gilt sowohl für den Perimeterbereich als auch für den Sockelbereich. Wahlweise finden im Perimeterbereich auch XPS-Platten Anwendung, welche an beiden Breitseiten noch eine Extrusionshaut besitzen, während im Sockelbereich XPS-Platten mit nur einer verhauteten Breitseite Anwendung finden.

Die XPS-Platten mit einer verhauteten Breitseite können dadurch erreicht werden, daß die XPS-Platten aus einem teilweise bearbeiteten Extrusionsstrang stammen. Dann wird nur eine Breitseite des Extrusionsstranges gefräst, d.h.. *Extrusionshaut entfernt.* An der anderen Breitseite verbleibt die Extrusionshaut.

An den verhauteten Plattenflächen ist die Kleberbeschichtung entbehrlich.

Die XPS-Platten mit einer verhauteten Breitseite werden bei der Verlegung der Platten so angeordnet, daß die verbliebene Extrusionshaut dem Gebäude zugewandt ist.

Haftvermittler sind an Polystyrolschaumplatten an sich bekannt. Es gibt einen umfangreichen Stand der Technik zur Beschichtung von EPS-Platten und XPS-Platten mit Mörtel mit Kunststoffanteilen. Durch die im Mörtel enthaltenen Kunststoffanteile ist es möglich, daß der ansonsten aus anorganischen Bestandteilen aufgebaute Mörtel (Zement und/oder Gips) an der Kunststoffoberfläche der XPS-Platten oder EPS-Platten haftet.

Vorzugsweise findet dabei ein armierter Mörtel Anwendung. Der Mörtel bildet eine Haftgrundlage für Fliesen bzw. für üblichen Fliesenkleber. Dabei ist der Mörtel nicht wasserabweisend, sondern wasseraufnehmend, weil die üblichen Fliesenkleber einen Wasseranteil besitzen und weil das Wirksamwerden des Fliesenkleber davon abhängt, daß Wasser aus dem Fliesenkleber in die Mörtelschicht aufgenommen wird. Für derartige Systeme wird üblicherweise auch beansprucht, daß die Mörtelschicht geeignet ist, um auch verputzt zu werden oder tapeziert zu werden oder gestrichen zu werden.

Solche Mörtelschichten sind zum Beispiel in der DE 4234269C1 beschrieben. Die DE4234269C1 beschreibt herkömmliche Mixturen aus Zement, Wasser, Kunststoffanteilen(sogenannter Polymerbeton). Solcher Mörtel wird als Zementmörtel bezeichnet und ist üblicherweise mehr oder weniger stark wasseraufnehmend. Ein Schutz der Kunststoffschaumplatten vor der Wasseraufnahme geht von derartigen Mörteln nicht aus.

Eine Mörtelbeschichtung von Kunststoffschaumplatten ist auch in der AT-PS242581 beschrieben. Dort ist von hydraulisch gebundenen Deckschichten aus Mineralstoffen die Rede. Als hydraulisches Bindemittel ist wie bei der DE4234269C1 ein Zement vorgesehen.

Eine Mörtelbeschichtung von Kunststoffschaumplatten ist auch aus der DE-PS1504835 bekannt; desgleichen aus der DE-OS2411743 und aus der DE3423006C2. Die Mörtelschicht besteht wie bei den zuvor erläuterten Druckschriften aus hydraulisch gebundenem Mineralstoffen.

Im Unterschied zu dem beschriebenen Stand der Technik wird nach der Erfindung nach Auftragen des Klebers *wahlweise* Sand oder Kies oder Splitt *als Haftvermittler* auf den Kleber aufgetragen, solange der Kleber noch klebefähig ist. Dann bewirkt der Kleber zugleich eine Verbindung zwischen dem Sand bzw. Splitt und den Platten.

Die Körnung von Sand und Splitt ist so bemessen, daß eine gute Haftung des später aufgetragenen Putzes gewährleistet ist. Die richtige Körnung wird in wenigen Versuchen mit unterschiedlichen Körnungen und üblichen Putzen ermittelt.

Der Sand oder Kies oder Splitt wird wahlweise aufgestreut oder aufgeschüttet. Dabei kann sofort die richtige Menge aufgetragen werden. Vorteilhaft kann es sein, eine Sand- oder Splitt-Menge mit Überschuß aufzutragen und den Überschuß anschließend wieder zu entfernen. Für die Entfernung eignet Blasen oder Bürsten oder Rütteln.

Für obige Auftragsweise von Sand oder Kies oder Splitt ist der erfindungsgemäß gewählte Kleber von Vorteil, weil er einerseits eine Frühfestigkeit und andererseits eine extrem hohe Entfestigkeit besitzt. Polyurethankleber hat darüber hinaus gegenüber Witterungseinflüssen (Temperatur, Frost, Wasser) hohe Widerstandswerte.

Durch die Frühfestigkeit des Klebers ist es möglich, XPS-Platten in einer Verfahrenslinie
a) zu extrudieren,
b) *an der Oberfläche zu bearbeiten*
c) abzulängen
d) mit einem Kleberauftrag zu versehen
e) wahlweise mit dem Haftvermittler zu beschichten und
f)*überschüssigen Haftvermittler zu entfernen*
g) zu stapeln

Die oben beschriebene Frühfestigkeit und Handhabungsmöglichkeit erlaubt es, den genannten Extrusionsstrang auf einem Rollgang aufzunehmen. Auf dem Rollgang bewegt sich der Strang mit Extrusionsgeschwindigkeit.

Der Extrusionsstrang durchläuft mit dieser Geschwindigkeit alle nachfolgenden Bearbeitungsstationen. Wie oben ausgeführt, gehört zu den Bearbeitungsstationen z.B. eine Frässtation zur Entfernung der Extrusionshaut an dem Extrusionsstrang. Anschließend durchwandert der Strang die Trennstation. Dort werden die einzelnen Platten z.B. mit einer Säge von dem Strang abgelängt.

Dem folgt eine Station zum Aufbringen des Klebers (Kleberstation) und die Station zum Aufbringen des Haftvermittlers und schließlich eine Stapelstation. In der Kleberstation wird vorzugsweise ein durch Erwärmung verflüssigter Kleber aufgesprüht. Durch Erkalten des Klebers tritt eine erste Verfestigung des Klebers ein. Der Haftvermittler wird entweder unmittelbar mit dem Kleber aufgegeben oder anschließend aufgegeben, bevor die Verfestigung eintritt.

Wahlweise können auch vorbereitete bzw. abgelagerte XPS-Platten in einer kleineren Verfahrenslinie mit Kleber und anschließend mit Haftvermittler beschichtet und anschließend gestapelt werden. Bei EPS-Platten wird diese Verfahrenslinie vorzugsweise zur Anwendung kommen.

Durch die Frühfestigkeit besteht keine Gefahr, daß der Haftvermittler beim Stapeln verschoben wird und die darüber liegende oder darunter liegende Platte mit dem Kleber in Berührung kommt und zwei Platten im Stapel miteinander verkleben.

Die Zeit, welche nach Aufbringen des Klebers für das Aufbringen des Haftvermittlers zur Verfügung steht, wird als Offenzeit bezeichnet.

In weiterer Ausbildung der Erfindung wird der Kleber auf eine Offenzeit von wenigen Minuten eingestellt, z.B. von weniger als 10 min, vorzugsweise weniger als 5min und noch weitere bevorzugt weniger als 2 min. Die Zeit ist einerseits ausreichend, um die Ausgangsplatten mit Haftvermittler zu beschichten. Andererseits ist die Zeit ausreichend, damit der Kleber genug anzieht, um die so beschichteten Platten stapeln und ins Lager fahren zu können.

Der PU-Kleber ist durch dauerhafte Beständigkeit gekennzeichnet. Die Aushärtung kann nach etwa 24 Stunden abgeschlossen sein. Die Aushärtung kann auch länger dauern.

Da die extrudierten Platten zu einer gewünschten Alterung der Platten üblicherweise mehrere Tage, je nach Dicke und je nach verwendetem Treibmittel zum Teil mehrere Wochen oder Monate gelagert werden, ist ein langes Aushärten unschädlich.

Die Verklebung wird durch Bewitterungseinflüsse, Wasser, hohe Temperatur, Frost-Tau-Wechsel nicht beeinflußt.

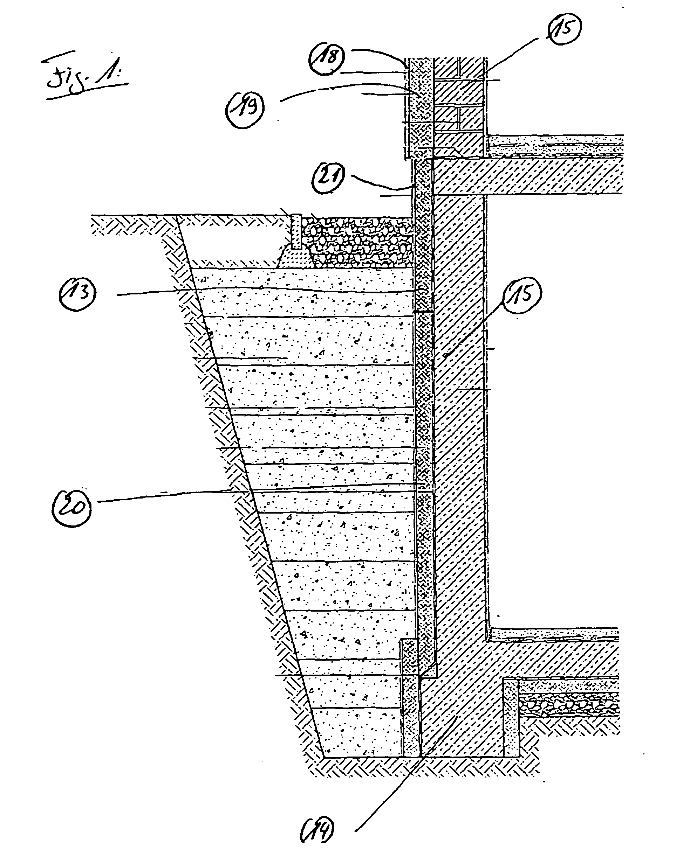

Ein Ausführungsbeispiel der Erfindung ist in der Fig. 1 dargestellt.

Die Gebäudewand 15 steht auf einem Fundament 14 mit angrenzendem Erdreich. Außenseitig sind an der Gebäudewand 15 verschiedene Platten 13 und 19 und 20 befestigt. Die Platten 13 und 19 unterscheiden sich dadurch voneinander, daß die Platten 13 aus XPS-Platten bestehen und in der oben beschriebenen Form eine Extrusionshaut an der gebäudeseitigen Breitseite besitzen sowie außenseitig eine nicht dargestellte Beschichtung besitzen, während die Platten 19 als EPS-Platten ausgebildet sind und unbeschichtet sind.

Die Platten 20 sind XPS-Platten und besitzen an beiden Breitseiten eine Extrusionshaut.

Die nicht dargestellte Beschichtung der Platten 13 wird durch eine Kleberschicht und einen Haftvermittler gebildet.

Alle Platten 13 und 19 sind in der oben beschriebenen Form mit einem Stufenfalz bzw. mit einer Stufe versehen, so daß sie überlappend verlegt werden können.

In anderen Ausführungsbeispielen ist zwischen den Platten eine Nut-Feder-Verbindung vorgesehen.

Die Platten 13 und 19 befinden sich in einer Anordnung, in der sie mit den Längsseiten liegen und mit den Breitseiten stehen.

Außenseitig ist in der dargestellten Einbaulage noch gestrichelt dargestellt Putzschicht 18 und 21 vorgesehen.

Bei 21 handelt es sich um den Sockelputz.

## Patentansprüche

1. Verfahren zur Verringerung der Wasseraufnahme von Isolierungen aus Polystyrolschaumplatten (13,19) an vertikalen Gebäudenaußenflächen (15), die lsolierung bestehend aus EPS-Platten oder XPS-Platten, wobei insbesondere oberhalb des Erdreiches EPS-Platten und im Erdreich XPS-Platten Anwendung finden, **dadurch gekennzeichnet, daß** die Platten mit einem diffusionsoffenen und zugleich wasserabweisenden Kleber an zumindest einer Breitseite beschichtet werden, wobei ein Kleber Verwerdet wird, *der*
*a)ein Polyurethankleber ist oder*
*b)eine Mischung aus einem Polyurethankleber und einem Schmelzkleber ist oder*
*c)ein Polyurethankleber ist, der zugleich ein Schmelzkleber ist.*

2. Verfahren nach Anspruch 1, **dadurch gekennzeichnet, daß** soviel Kleber aufgetragen wird, daß die Feuchtigkeitsaufnahme der Platten (13,19)höchstens 0,9 Vol%, vorzugsweise höchstens 0,7Vol% und noch weiter bevorzugt höchstens 0,5Vol%, bezogen auf das Plattenvolumen beträgt.

3. Verfahren nach Anspruch 1 oder 2, **dadurch gekennzeichnet, daß** eine Klebermenge bei XPS-Platten von 50 bis 200 Gramm pro Quadratmeter, vorzugsweise 100 bis 150 Gramm pro Quadratmeter aufgetragen wird.

4. Verfahren nach einem der Ansprüche 1 bis 3, **dadurch gekennzeichnet, daß** der Kleber aufgedüst oder aufgesprüht oder aufgestrichen wird.

5. Verfahren nach einem der Ansprüche 1 bis 4, **dadurch gekennzeichnet, daß** die Kleberbeschichtung inline mit der XPS-Extrusion erfolgt.

6. Verfahren nach einem der Ansprüche 1 bis 5, **dadurch gekennzeichnet, daß** Sand oder Kies oder Splitt auf die Kleberschicht aufgestreut wird, bevor der Kleber abgebunden hat.

7. Verfahren nach Anspruch 6, **dadurch gekennzeichnet, daß** der Sand oder Kies oder Splitt mit einer Überschußmenge aufgetragen und daß die Überschußmenge nach Erreichen einer Stapelfestigkeit abgeschüttelt oder abgerüttelt oder abgeblasen oder abgebürstet wird.

8. Isolierung nach Anspruch 7, **gekennzeichnet durch** Verwendung eines Klebers mit einer Offenzeit von weniger als 10min, vorzugsweise von weniger als 5min und noch weiter bevorzugt von höchstens 2min.

9. Verfahren nach einem der Ansprüche 1 bis 8, **dadurch gekennzeichnet, daß** im Fassadenbereich und/oder im Sockelbereich kleberbeschichtete EPS-Platten (19) und im Perimeterbereich kleberbeschichteten XPS-Platten(13) Anwendung finden

## Claims

1. Method for reducing the water absorption of insulation made of foamed polystyrene panels (13,19) on vertical exterior surfaces of buildings (15), the insulation consisting of EPS panels or XPS panels, wherein EPS panels are used particularly above ground level and XPS panels are used particularly below ground level, **characterised in that** the panels are coated with a permeable and at the same time water repellent adhesive on at least one broad side, wherein an adhesive is used that
*a) is a polyurethane adhesive or*
*b) is a mixture of a polyurethane adhesive and a hot melt adhesive or*
*c) is a polyurethane adhesive that at the same time is a hot melt adhesive.*

2. Method according to claim 1, **characterised in that** as much adhesive is coated on such that the moisture absorption of the panels (13, 19) is at most 0.9 vol %, preferably at most 0.7 vol % and more preferably at most 0.5 vol %, based on the panel volume.

3. Method according to claim 1 or 2, **characterised in that** with XPS panels, a quantity of 50 to 200 grams, preferably 100 to 150 grams of adhesive per square metre is coated on.

4. Method according to one of the claims 1 to 3, **characterised in that** the adhesive is atomised on or sprayed on or brushed on.

5. Method according to one of the claims 1 to 4, **characterised in that** the adhesive coating is effected in-line with the XPS extrusion.

6. Method according to one of the claims 1 to 5, **characterised in that** sand or gravel or grit is strewn onto the adhesive layer before the adhesive has set.

7. Method according to claim 6, **characterised in that** an excess amount of the sand or gravel or grit is deposited and that after a stacking strength has been reached, the excess amount is shaken off or vibrated off or blown off or brushed off.

8. Insulation according to claim 7, **characterised by** the use of an adhesive having an open time of less than 10 minutes, preferably less than 5 minutes and more preferably at most 2 minutes.

9. Method according to one of the claims 1 to 8, **characterised in that** adhesive-coated EPS panels (19) are used in the façade area and/or in the base area and adhesive-coated XPS panels (13) are used in the perimeter area.

## Revendications

1. Procédé pour réduire l'absorption d'eau d'isolations en panneaux de mousse en polystyrène (13, 19), au niveau des surfaces extérieures verticales de bâtiments (15), l'isolation étant composée de panneaux en EPS ou de panneaux en XPS, les panneaux en EPS trouvant une application en particulier au-dessus du sol, et les panneaux en XPS dans le sol, **caractérisé en ce que** les panneaux sont recouverts d'une substance collante perméable à la vapeur et également hydrofuge au niveau d'au moins un côté large, dans lequel une substance collante est utilisée qui est
a) une colle au polyuréthane ou
b) une combinaison d'une colle au polyuréthane et d'une colle thermofusible ou,
c) une colle au polyuréthane qui est également une colle thermofusible.

2. Procédé selon la revendication 1, **caractérisé en ce que** soit appliquée tant de substance collante que l'absorption d'humidité des panneaux (13, 19) est de 0,9 % Vol. au maximum, de préférence 0,7 % Vol. au maximum et davantage de préférence, 0,5 % Vol. au maximum, en référence au volume du panneau.

3. Procédé selon la revendication 1 ou 2, **caractérisé en ce qu'**une quantité de substance collante de 50 à 200 grammes par mètre carré, de préférence de 100 à 150 grammes par mètre carré, est appliquée pour les panneaux en XPS.

4. Procédé selon l'une des revendications 1 à 3, **caractérise en ce que** la substance collante est pulvérisée ou vaporisée ou étendue.

5. Procédé selon l'une des revendications 1 à 4, **caractérisé en ce que** le revêtement de substance collante est effectué en ligne avec l'extrusion du XPS.

6. Procédé selon l'une des revendications 1 à 5, **caractérisé en ce que** du sable ou du gravier ou du gravillon est répandu sur la couche de substance collante avant la prise de la substance collante.

7. Procédé selon la revendication 6, **caractérisé en ce que** du sable ou du gravier ou du gravillon est appliqué en quantité excédentaire et **en ce que** la quantité excédentaire est secouée ou vibrée ou soufflée ou balayée.

8. Procédé selon la revendication 7, **caractérisé par** l'utilisation d'une substance collante avec un temps d'exposition inférieur à 10 minutes, de préférence inférieur à 5 minutes et davantage de préférence, de 2 minutes tout au plus.

9. Procédé selon l'une des revendications 1 à 8, **caractérisé en ce que** dans la zone de façade et/ou dans la zone de soubassement, des panneaux en EPS (19) recouverts de substance collante trouvent une application, et dans la zone périmétrique, des panneaux en XPS (13) recouverts de substance collante.
